(19) Europäisches Patentamt
European Patent Office
Office européen des brevets

(11) **EP 1 884 884 A2**

(12) **EUROPEAN PATENT APPLICATION**

(43) Date of publication:
**06.02.2008 Bulletin 2008/06**

(51) Int Cl.:
***G06K 9/64*** *(2006.01)*   ***G06T 7/00*** *(2006.01)*

(21) Application number: **07113413.4**

(22) Date of filing: **30.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **03.08.2006 TR 200604106**

(71) Applicant: **TUBITAK-Turkiye Bilimsel ve Teknolojik ve Arastima Kurumu Ataturk Bulvari No. 221 06100 Kavaklidere Ankara (TR)**

(72) Inventors:
• **Sakarya, Ufuk**
  **06531 ANKARA (TR)**
• **Es, Sukru Alpan**
  **06531 ANKARA (TR)**
• **Tunali, Erol**
  **06531 ANKARA (TR)**

(54) **Use of graphics processing unit (GPU) in the investigation of marks used in criminology**

(57)     This invention is related with acceleration of the comparison processes to determine the matching possibilities of marks used in criminological investigations by benefiting from the processing capacity of the graphics processing unit in addition to the processing capacity of the computer's central processing unit (CPU) in the analysis of marks used in criminological investigations (MUCI) - cartridge cases and bullets from expelled from firearms, marks on the parts thereof, marks left by stabbing and cutting weapons on various media, human biometric marks (fingerprints, retina, face etc.), marks left by tools, devices and clothing of people on various media (footprints etc.) and/or new marks obtained from said marks or resulting from certain transformation(s) and/or filter(s). The invention aims at increasing the processing capacity of a computer in MUCI comparison. GPU processing capacity is used in addition to the CPU processing capacity for realization of processes realized for MUCI data comparison. The processing capacity of the GPU, which is normally used only as a computer graphic interface, is used for MUCI comparison in this invention.

Fig. 4

**EP 1 884 884 A2**

**Description**

**Technical Field**

This invention is related with speeding up of the comparison processes to determine the matching possibilities of marks used in criminological investigations by making use of the processing capacity of the graphics processing unit in addition to the processing capacity of the computer's central processing unit (CPU) in the analysis of marks used in criminological investigations (MUCI) - cartridge cases and bullets from expelled from firearms, marks on the parts thereof, marks left by stabbing and cutting weapons on various media, human biometric marks (fingerprints, retina, face etc.), marks left by tools, devices and clothing of people on various media (footprints etc.) and/or new marks obtained from said marks or resulting from certain transformation(s) and/or filter(s).

**Background Art**

The human biometric marks are important marks used in criminology and security. In the same manner marks left by tools, devices and clothing of people on various media may provide clues to solve a case. The firearms or cutting and stabbing weapons leave MUCI on the medium they interact with. Firearms cause unique marks on the bullets expelled and the cartridge cases of the bullets. In the same way, the cutting and stabbing weapons also leave marks unique to themselves on the media they interact with. The security units try to solve the cases with the use of MUCI data. For instance, efforts are exerted to obtain information on the involved firearms, from the cartridge cases and bullets found at the site of the incident. The cartridge cases and bullets fired from the same weapon are called sister bullets or sister cartridge cases. Even if the weapon used in the crime cannot be found, information, which is obtained from the sister bullets and sisters cartridge cases, on the cases in which the same weapon has been used can be very useful in establishing the criminal relations. Just as so, said "sister" term can also be used for other marks in criminology. For example, the sister footprint of a shoe is the mark left by the same shoe on another media at another time. This term can be broadened to cover fingerprints, face and other possible marks related with criminology.

Generally, the same type two of MUCI are compared with one another in the MUCI analysis. This process is realized by a specialist. The specialist tries to decide whether two marks are sisters by examining the similarities between the two MUCI. This examination is a time consuming process for the specialist. The increasing amount of total MUCI increases the work load of comparison between the available MUCI and the incoming MUCI. The work load of the specialist also increases with the gradual accumulation of the number of MUCI. In order to ease the task of the specialist, development of systems that are capable of realizing MUCI comparison automatically and determining the sisterhood probability of the MUCI with an acceptable precision rate and an acceptable spent time is required. Currently, there are systems that can assist the specialists in the MUCI analysis.

In the existing state of the technique, the 2 dimensional image or 3 dimensional topographic data of required surfaces of media or people bearing MUCI are transferred into digital form with the imaging system or hereby mentioned digital data is provided externally to the system in order to realize the MUCI analysis with the aid of data processing devices. Hereby mentioned digital data or the new data resulting from application of certain signal processing methods are used in the analysis. Obtained data are compared to determine the sisterhood probability of the two MUCI. The specialists determine the sisterhood relations between the MUCI based on the data.

Graphic processing units (GPU) are units specialized for visualization of the three dimensional virtual environments by means of fast synthesis in the computer. Image synthesis is a computationally expensive process and the computation must be performed for each picture element (pixel). As the calculations may be realized for each pixel independently, image synthesis is very suitable to parallel processing. Based on this notion, the GPUs are made of many vectoral or scalar processing units running in parallel.

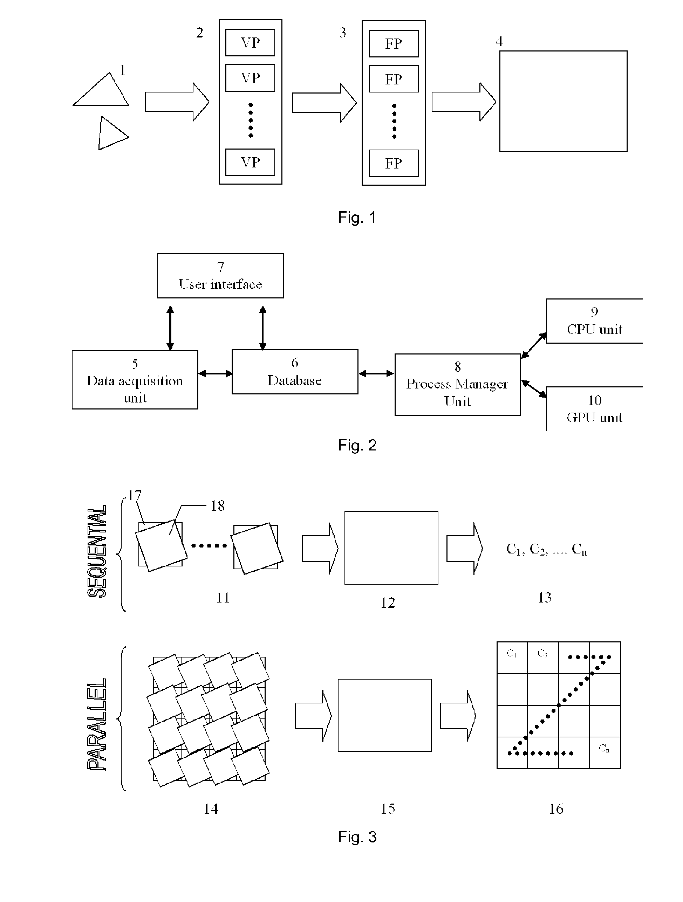

The internal structure of a GPU is outlined in Figure 1. A typical GPU contains many vertex processing units (2) and pixel processing units (3) running in parallel. Geometric data (1) sent to the GPU is transformed by the vertex processing units and the projection on the display (4) is calculated. The transformed and projected geometric data (1) are colorized by the pixel processing units (3). Newer generation GPUs will contain new units like geometric processing units in addition to these two groups of processing units.

Basically GPUs are used to colorize and shade the triangles sent by the CPU. Moreover, the recent GPUs have increased their capacities not only on processing power but also in general programmability. Eventually, graphic processors have become general purpose, programmable and powerful stream parallel processors. They have the potential for working substantially faster than the CPUs in problems suitable for stream parallel processing.

The invention constituting the subject matter of patent No. US20050271302 aims at using the GPU for image registration purpose. As defined under paragraph [0022] of the patent, image registration method entails finding the spatial transformation parameters existing between the images in a data set. Image registration method strives to integrate different images belonging to the same object/place or identify of the spatial relation between thereof. Thus the spatial transformation parameters are of great importance. The method recommended in this patent is different to that of the image matching method. The method of this patent is not interested in finding the spatial transformation parameters. In fact, finding the transformation parameters is not meaningful in terms of identification of sister MUCI either, because the images compared do not belong to the same object or location. The objective is to examine the sisterhood probability, i.e. the similarities as mentioned above. Moreover, there are differences between the methods recommended for use of the GPU in this patent and methods of use of the GPU in the constituting the subject of invention no. US20050271302. The most significant difference is that more than one comparison is batched and processed by placing different images or transformations on a logical grid in the GPU draw buffer rather than comparing them one by one. This reduces the data exchange, synchronization, and the use of the application program interface (API) which causes the bottleneck between the CPU and the GPU, and thus it is of great importance in terms of optimization of the performance.

**Disclosure of Invention**

**Technical Problem**

The objective of this invention is to reduce the automatic MUCI comparison time. Considering the ever-growing MUCI database, slow MUCI comparison performance constitutes an important problem. Automatic comparison of great amounts of MUCI on a computerized system requires high processing power. In order to obtain the comparison result in the required period, the amount of computations realized by the system in the unit time must of sufficiently high. Based on the number of comparisons to be realized, a single CPU may not be of sufficient processing power. In the existing state of the technique,, the demand of processing power is satisfied by using supercomputers that has high processing capacity and/or multiple processors per computer (parallel systems) and/or using more than one computer in a network environment (distributed systems). One of the most important problems with the parallel or distributed systems is the additional costs imposed by multiple CPUs or computer systems (or both). Additionally, the operation and maintainability of the system become more difficult as the number of computers increase. Improving the processing capacity of each computer for automatic MUCI comparison gives rise to the reduction of number of required computers systems.

This invention aims at increasing the processing capacity per computer in MUCI comparison. For this purpose, GPU processing power is used in addition to the CPU for realization of MUCI data comparison. Here, the GPU is used as a general purpose parallel processor in apart from its main purpose of graphics synthesis, and the evidence comparison process is parallelized substantially. The similarity calculation is accelerated by loading various MUCI data to the GPU simultaneously and by comparing them in parallel.

**Technical Solution**

MUCI comparison processes in the subject method of the invention are realized as follows:

For comparison of MUCI data on the GPU, media bearing the MUCI is digitalized as data containing 2 or 3 dimensional information by the data acquisition unit (5) or input to the system via the data acquisition unit (5) as ready. The database (6) is a data storage media such as RAM, ROM, disk, harddisk, CD, DVD, cartridge etc. on which the MUCI data (including the sisterhood possibilities) is stored for future access. Hereby mentioned digitalized data is sent to the database (6) by the MUCI data acquisition unit (5) and recorded. New data for comparison is obtained by application of certain transformations and/or filters (median filter, mean filter, Gaussian filter, Hough transform, Fourier Transform, wavelet transform, polar coordinate transform, projection, edge detection, surface derivative, gradient etc.), if required. All MUCI-related data is recorded into the database (6). The system user can control the process via the user interface (7) during the above processes.

The Process Manager Unit (8) obtains the data required for MUCI comparison from the database (6). The Process Manager Unit (8) sends the MUCI comparison information and the required commands to the CPU unit (9) and/or the GPU unit (10). The Process Manager Unit (8) records the outputs from the CPU unit (9) and/or GPU unit (10) to the database (6). The database (6) presents the outputs to the user via the user interface (7).

Basically, two or more MUCI data are used in the comparison process. The probability of sisterhood of the compared data is calculated as a result of this process. Transformation is applied to one of the MUCI for comparison (rotated, shifted or subjected to another transformation process). This process is applied to every MUCI set (20) to be compared for potential transformation parameters (21) and collective probability results (sisterhood probability) (22) are found. It is possible to accelerate this process with the use of multicore CPUs that support the vectoral SIMD command set. However, even in that case GPUs can provide higher parallelization levels.

**Virtual Parallel Comparison (VPC) with GPU**

The invention is based on use the efficient utilization of the high arithmetic processing power of the GPU and intense parallelization of the transformation and comparison operations of MUCI images. The comparison process is realized among a subset of elements selected from the comparison set. The comparison set is composed of the MUCI images to be compared and the set of potential transformation parameters that will be applied to them.

Rather than thousands of sequential transformation processes (See Fig. 3. (11), (12), (13)) the transformed version of the MUCI images are overlapped on one another on the GPU draw buffers (14) to determine similarity coefficients. The transformation providing the highest coefficient can be determined rapidly with parallel operations in one or more phases (15, 16). Hereby mentioned parallelization may be examined in three sections: First of all GPUs have numerous scalar or vector processing units and are capable of performing parallel computation in the real sense. Secondly, the block operations (drawing triangles) are perceived as parallel by the user. In other words, the GPU pixels programs are processed as if they are applied simultaneously to the drawn pixels. Internally, GPU can process the drawing operations by dividing into several work packages (small quad areas). Thirdly, the CPU sends the transformation parameters and the texture objects to be compared to the GPU without waiting the ongoing comparison process. The GPU places and processes the incoming data in a grid form within a large local buffer. Meanwhile, the CPU can get the new comparison data from the MUCI database (19) and determine the potential transformation parameters (21) in parallel before GPU finishes the task. Hereby mentioned parallelization explained in three sections is named Virtual Parallel Comparison as it entails actual parallelization and perceived parallelization.

<u>**Details of the Comparison Process**</u>

MUCI data is transferred to the GPU memory as texture objects. Two or more texture objects are used for comparison. While one of these is kept still (background texture) (17) the others (query textures (18)) are rotated at certain angles for comparison with the background texture (17). The rotation process may be realized on-the-fly, during the matching operation, or pre-transformed in advance and subsequently sent to the matching process. Moreover, several transformations may be grouped and placed in a single query texture (18) component as a vector rather than computing a separate query texture for each transformation value. Thus the vectoral command set of the GPU may be used in an efficiently. Every component of the query texture (18) is subjected to similarity evaluation with the background texture (17) components it overlaps during the matching process. The evaluation criteria may be -but not necessarily limited to- any of the criteria stipulated below. Once these values are determined they are normalized on a probability value between 0 and 1. More detailed backround information of some of the following formulas can be seen in the reference book, R.O. Duda, P.E. Hart, D.G. Stork, Pattern Classification, 2nd ed., A Wiley-Interscience Publication, John Wiley & Sons, Inc., 2001.

Given an image of A(x,y) for a background texture (17) and B(x,y) for the query texture (18) which has been subjected to geometrical transformation process; and a width and length of the images being W and H. The total number of pixels shall be $N = W*H$. The area of the images shall be D and the average of A(x,y) and B(x,y) shall be $O_A$ and $O_B$,

a)Image difference mean square (IMS): The mean value of the difference-square of the two images, which is shown in the following formula:

$$IMS = \frac{1}{N} \sum_{x,y \in D} (A(x,y) - B(x,y))^2$$

b)Image difference absolute mean (IAM): Mean value of the absolute differences of two images, which is shown in the following formula:

$$IAM = \frac{1}{N} \sum_{x,y \in D} |A(x,y) - B(x,y)|$$

c)Normalized Correlation Coefficient (NCC): Normalized correlation coefficient of two images, which is shown in the following formulas:

NCC=

$$\frac{\sum_{x,y \in D}(A(x,y)-O_A)(B(x,y)-O_B)}{\sqrt{\sum_{x,y \in D}(A(x,y)-O_A)^2}\sqrt{\sum_{x,y \in D}(B(x,y)-O_B)^2}}$$

7] NCC=

$$\frac{N(\sum_{x,y \in D}A(x,y)B(x,y))-(\sum_{x,y \in D}A(x,y))(\sum_{x,y \in D}B(x,y))}{\sqrt{N(\sum_{x,y \in D}A(x,y)^2)-(\sum_{x,y \in D}A(x,y))^2}\sqrt{N(\sum_{x,y \in D}B(x,y)^2)-(\sum_{x,y \in D}B(x,y))^2}}$$

The formula of NCC given above is applied to the complete image. In a similar manner, they may be applied for certain sections rather then the complete image. A single sisterhood probability may be found by using same or different weight coefficients for each section when combining the value of hereby mentioned sections.
d)Image difference cosines mean (ICM): Cosines mean of the differences of two images, which is shown with the following formula:
ICM=

$$\frac{1}{N}\sum_{x,y \in D}\cos(A(x,y)-B(x,y))$$

e) Image Difference Variance (IDV): Variance value of the differences of two images, which is shown in the following formula; function the var(.) calculates the variance.
IDV=

$$\mathrm{var}(A(x,y)-B(x,y))$$

f) Mutual Information Amount (MIA): Entropy based comparison of two images, which is shown with the following formula:
MIA=

$$\sum_{i,j}p(i,j)\log\frac{p(i,j)}{p_A(i)p_B(j)}$$

The p(.) in the above formula is probability distribution function.
Basically, an application programming interface (API) is required in order to use GPU. Any API facilitating GPU programming, such as OpenGL or DirectX, can be used to realize the system.
The number of textures that can be compared simultaneously in the buffer grid is determined according to the characteristics and capabilities of the target GPU. For instance, the GPU memory size and the maximum draw buffer size have a direct impact on the maximum number of the comparisons that can be carried on the same buffer on the same time . Grouping of the processes in order to execute on the same buffer is among the most important components of the system. The system is designed to execute one or more comparison processes at the same time within a single buffer. Thus, the communication problem, constituting a bottleneck between the CPU and GPU can be mitigated. Otherwise, computation and obtaining similarity results for every texture pair separately increases the expensive API commands substantially (state settings, loading of new pixel/vertex programs, cleaning of the buffer, transfer of outputs from the GPU to the CPU) and greatly prevents the asynchronous operation of the CPU and GPU.

The operation of the system can be illustrated with an example: the draw buffers to be used for comparison and the required vertex/pixel programs are created prior to starting the processes. After completion of the preparations related with the GPU use, background image containing MUCI data is loaded from the database. Said MUCI may be the gradient feature of the mark left by the weapon magazine on the cartridge case. The MUCI image contains a gradient value on each pixel. Subsequently, the query image to be compared with the background is loaded in the same manner. Background image also consists of a gradient feature vector like the other. Both images are transferred to the GPU memory as texture objects. Afterwards, the comparison process starts. The query texture (18) is shifted over the background texture (17) in horizontal and vertical directions by certain number of pixels (26). It is also rotated in certain angle steps in a certain angle range at each shifting. Then the background texture (17) and the query texture (18) are compared to compute a similarity result. The comparison process is repeated for each transformation and the greatest similarity result value obtained is considered as the similarity coefficient of the two textures. Most GPUs can realize arithmetical and logical operations on floating point vectors (upto 4-floats). In this context, in order to make efficient use of the vector processing units of the GPU and reduce the total processing load, the angle may be sent to the GPU in groups of 4 instead of realizing a separate comparison process for each angle value. In this manner, the total number of comparison operations may be reduced at a rate of 4:1. Subsequently, comes the phase of similarity coefficient computation. The vertex processor gets rectangle vertices with the same size of the background texture (17) along with required parameters such as transformation parameters, sub-buffer position etc. and forwards the calculated coordinate parameters to the pixel processor (21). Thus, a pixel program is run with the appropriate parameters for each pixel. In the first phase, the pixel program realizes the coefficient computations. The coefficient computation consists of the mean value of an arithmetical operation realized between the pixels of the background texture (17) coinciding with the pixels of the transformed query texture (18). The cosines of the difference between the two angles may be used for the arithmetical operation. As it is possible that certain pixels may not contain meaningful values (e.g. the space outside the silhouette of the bullet shell), these pixels are not included into the similarity computations. Ultimately, every pixel processed (drawn) shall contain the mutual similarity value. In the second phase the pixel based similarities values are summed in order to obtain the mean similarity coefficient of the transformation and the result is written to a certain single pixel. In the following phase, the pixels in which the mean similarity results written are transferred from the GPU local memory to the CPU (22). After processing the whole comparison set, a sisterhood matrix is created on the CPU (23) and this information is transferred to the processes manager unit (8).

Today's GPUs or APIs are imposing limitations to features such as maximum loop number, program length, and number of instructions in vertex and pixel programs. This is the main reason why the similarity coefficient and mean calculation processes are realized in separate phases. It shall be possible to unite the phases with the developing GPU technologies. In order to realize superior level of virtual parallelization, the comparison process of each transformation is carried on in separate buffer areas, as rows and columns of non-overlapping rectangles on the GPU buffer. Meanwhile, the CPU sends all comparison textures along with the transformation parameters without waiting for the GPU to complete the comparison processes one by one. In other words, the user perceives that the comparisons are realized in parallel. The actual parallelism is the achieved by vector processing of two or more transformations simultaneously and with the numerous pixel processors of the GPU running in parallel.

The query textures (18) in the example are transformed during the comparison phase. However, the transformation process may be computed by the CPU or the GPU prior to the comparison and pre-transformed texture may be used in the comparison process. At this stage, different transformations may be packed inside the different components of the same texture (i.e. in red, green, blue, alpha or briefly in RGBA). If the GPU permits packaging of two or more low resolution number formats inside high resolution number formats, several transformed images may be placed in each color component.

As explained in the example, different images may be selected instead of selecting the same MUCI images for every transformation placed on the grid. In effect, each grid cell may contain the same (or different) transformations of a different image set, instead of every grid cells containing different transformations of the same image set. For instance, when $A_1$ (background texture (17)), $B_1$, $C_1$ and $D_1$ (query textures (18)) are selected for the first grid cell and $T_1$ transformation is applied to them; $A_2$ (background texture (17)), $B_2$, $C_2$, $D_2$ (query textures (18)) may be selected and $T_2$ (or $T_1$) may be applied for the second grid cell. In this way, as much comparison processes as possible can be placed into the draw buffer simultaneously.

More than one background texture may be used at each grid cell in order to increase the number of comparisons to be realized at a single pass. The background textures may be sent as different texture objects or may be packed in the color channels of a texture object. In this case, when 4 background textures and 4 query textures are placed into the comparison process a total of 16 outputs shall be produced. The resulting outputs may be written simultaneously to several draw buffers in GPUs supporting multiple rendering targets. It is possible to pack a number of outputs to the possible extent inside the color channels of buffer pixels in order to reduce the required buffer size .

The size of the grid cells may be selected smaller than the texture dimension at a certain rate rather than being selected in the size of the background textures (17) as explained in the example. Thus, every cell pixel can contain the collective form of several transformation outputs. For instance, if the dimension of the background texture (17) has size of 256 x 256 pixels then the cell dimension may be selected as 128x128 pixels. In this case, each pixel drawn on the buffer is the conglomerate of 4 transformations subjected to the evaluation criteria. In other words, the transformation/ evaluation phase overlaps and takes care of a certain part of the means calculation phase. Thus, the cell size of the grid can be reduced to fit more comparison processes into the same draw buffer area.

Computer systems with more than one GPU units (10) installed may be used in order to increase the parallelism. The comparison set can be divided into non-overlapping subsets and processed by each GPU unit (10) in parallel. The GPUs used may be of different characteristics and capabilities. In this case, since the computational powers of the GPUs will be different, the idle state of the GPUs can be minimized and efficiency can be increased with dynamic or static load balancing. For better static load balancing a sample comparison set is selected and GPUs are benchmarked before the system starts. The individual comparison performance values measured can be used are for the load balancing. After benchmarking, the comparison set is distributed among the GPUs in direct proportion to the performance values obtained. In dynamic load balancing, the comparison set is divided into subsets (work packages). One or more work packages are sent to the GPUs on demand rather than the static distribution being realized at the very beginning. The next work package is immediately sent to the GPU that has completed the comparison without waiting for the others.

Further improvement of parallelization can be possible with the distributed operation of computer systems with one or more GPUs. In this case, while each computer performs a load balancing individually, a master computer that controls and realizes the work distribution over these computers can manage the workloads and ensure consistent operation.

**Brief Description of Drawings**

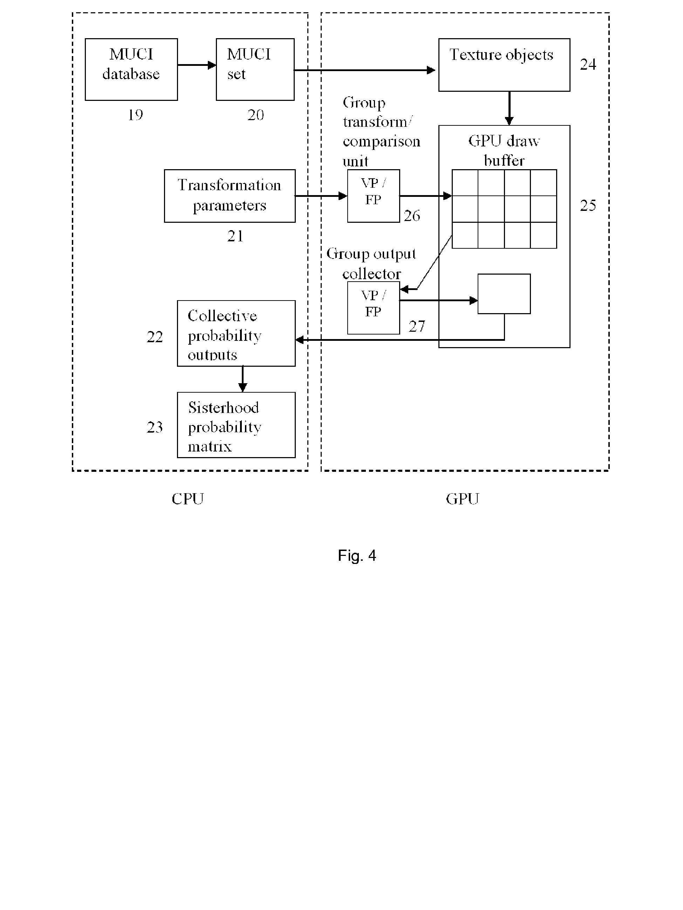

The system realized for achievement of the objective of this invention is illustrated in the annex, as follows:
Figure 1 - GPU system architecture.
The components in the figure are numbered individually according to the legend provided herein below.
1.Geometric data
2.Vertex Processing
3.Pixel Processing
4.Screen
Figure 2 - General system architecture.
The components in the figure are numbered individually according to the legend provided herein below.
5.Data acquisition unit
6.Database
7.User interface
8.Process Manager Unit
9.CPU unit
10.GPU unit
Figure 3 - Process of sisterhood probability computation.
The components in the figure are numbered individually according to the legend provided herein below.
11.Sequential arrangement of MUCI data
12.Sequential comparison operation
13.Sequential probability outputs
14.Parallel arrangement of MUCI data
15.Parallel comparison operation
16.Parallel probability outputs
17. Background texture
18.Query texture
Figure 4 - CPU -GPU data flow architecture.
The components in the figure are numbered individually according to the legend provided herein below.
19.MUCI database
20.MUCI set (for comparison)
21.Transformation parameters (potential)
22.Collective probability outputs (The collective probability outputs from the GPU. Every pixel contains one ore more probability outputs for each transformation that it represents.)

23.Sisterhood probability matrix (matrix of sisterhood probabilities of the comparison set)

24.Texture objects (in GPU local memory)

25.GPU draw buffer

26.Group transform/comparison unit

27.Group output collector

**Claims**

1. A system which, automatically makes a comparison among the MUCI (marks used in criminology investigations) data and computes the sisterhood probability of these data, **characterized by** the use of GPU processing capacity as a parallel processor in addition to the CPU processing capacity.

2. A system which automatically makes a comparison among the MUCI data and computes the sisterhood probability of these data, as in claim 1, **characterized by** the use of GPU processing capacity as a parallel processor in addition to the CPU processing capacity, computing the sisterhood probability of these data by placing MUCI data into GPU buffer in a matrix form, and transfer of outputs resulting from the process collectively to the CPU.

3. A system which automatically makes a comparison among the MUCI data and computes the sisterhood probability of these data, as in claim 1, **characterized by** the use of GPU processing capacity as a parallel processor in addition to the CPU processing capacity, transferring MUCI data to the GPU buffer as texture objects, placing MUCI data into GPU buffer in a matrix form, comparing two or more texture objects, computing the sisterhood probability by keeping certain textures fixed while subjecting others to certain transformations and transferring the outputs resulting from the process collectively to the CPU.

2    VP
     VP
1    ·
     ·
     VP

3    FP
     FP
     ·
     ·
     FP

4

**Fig. 1**

7
User interface

5
Data acquisition
unit

6
Database

8
Process Manager
Unit

9
CPU unit

10
GPU unit

**Fig. 2**

SEQUENTIAL

17
18

11

12

13

$C_1, C_2, .... C_n$

PARALLEL

14

15

16

$C_1$    $C_2$    ·····

$C_n$

**Fig. 3**

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050271302 A

**Non-patent literature cited in the description**

- **R.O. DUDA ; P.E. HART ; D.G. STORK.** Pattern Classification. A Wiley-Interscience Publication, John Wiley & Sons, Inc, 2001